# EUROPÄISCHE PATENTSCHRIFT

(11) **EP 4 436 857 B1**
(45) Veröffentlichungstag und Bekanntmachung des Hinweises auf die Patenterteilung: **10.09.2025**
(21) Anmeldenummer: 22823087.6
(22) Anmeldetag: 01.12.2022
(51) Int. Cl.: B61L 15/00, B61K 9/12

(54) **VERFAHREN UND VORRICHTUNG ZUM ÜBERWACHEN DER ÄQUIVALENTEN KONIZITÄT EINES SCHIENENFAHRZEUG-SCHIENE-SYSTEMS**
METHOD AND APPARATUS FOR MONITORING EQUIVALENT CONICITY OF A RAILWAY VEHICLE-RAIL SYSTEM
PROCÉDÉ ET APPAREIL DE SURVEILLANCE DE LA CONICITÉ ÉQUIVALENTE D'UN SYSTÈME DE VÉHICULE FERROVIAIRE-RAIL

(30) Priorität: 14.01.2022 DE 102022200376
(43) Veröffentlichungstag der Anmeldung: 02.10.2024
(73) Patentinhaber: Siemens Mobility GmbH, 81739 München (DE)
(72) Erfinder: MERTENS, Robert, 40668 Meerbusch (DE); SCHROEDER-BODENSTEIN, Kaspar, 40547 Düsseldorf (DE); STINGL, Bernhard Andreas, 47803 Krefeld (DE)
(74) Vertreter: Siemens Patent Attorneys
(86) Internationale Anmeldenummer: PCT/EP2022/084095
(87) Internationale Veröffentlichungsnummer: WO 2023/134921

(56) Entgegenhaltungen:
- EP-A2- 2 233 379
- EP-A2- 3 181 428
- WALENTA R ET AL: "BERUEHRGEOMETRIE VON RAD UND SCHIENE NEUE METHODEN ZUR UNTERSUCHUNG UND OPTIMIERUNG", ZE VRAIL - GLASERS ANNALEN: ZEITSCHRIFT FUER DAS GESAMTE SYSTEM BAHN, GEORG SIEMENS VERLAG GMBH & CO. KG, DE, vol. 121, no. 2/03, 1 February 1997 (1997-02-01), pages 245 - 254, XP000689648, ISSN: 0941-0589

## Beschreibung

Die Erfindung betrifft ein Verfahren zum Betreiben eines Schienenfahrzeugs, bei dem eine Laufstabilität des Schienenfahrzeugs mit Messungen erfasst wird.

Beim Fahren von Schienenfahrzeugen auf Schienen wird die Laufstabilität im wesentlichen durch die äquivalente Konizität des Rad-Schiene-Kontaktes bestimmt. Diese ergibt sich aus dem Zusammenspiel zwischen einerseits dem Profil der Räder des Schienenfahrzeugs, also den konisch profilierten Laufflächen der Räder, und andererseits streckenseitigen Faktoren. Bei diesen streckenseitigen Faktoren handelt es sich insbesondere um das Profil der Schiene, also die Form und den Zustand der Oberfläche des Schienenkopfes, und den Abstand zwischen den Schienen, insbesondere das Vorhandensein von Spurverengungen.

Eine Erhöhung der äquivalenten Konizität wirkt sich negativ auf die Laufeigenschaft des Schienenfahrzeugs aus. Es kommt vermehrt zum Schlingern, was im Extremfall eine Verschiebung des Gleisrostes zur Folge haben kann. Daher ist es wünschenswert, eine erhöhte äquivalente Konizität, welche sowohl fahrzeug- als auch streckenseitig verursacht sein kann, zu entdecken und zu beheben.

Das Dokument EP 3181428 A2 beschreibt, wie die Radkonizität eines oder mehrerer Räder eines Schienenfahrzeugs bestimmt wird. Basierend auf gemessenen Vibrationen wird die so genannte Hunting-Frequenz bestimmt, wobei eine gesteigerte Radkonizität größere Hunting-Frequenzen bewirken kann.

Schienenfahrzeuge sind häufig mit Reibungsbremssystemen ausgerüstet, bei denen durch das Gegeneinanderdrücken von Reibelementen eine Bremswirkung auf das Fahrzeug ausgelöst wird, d.h. kinetische oder potentielle Energie des Fahrzeugs wird in thermische Energie umgewandelt. Ein Beispiel für ein solches Reibungsbremssystem sind Klotzbremsen. Diese wirken direkt auf die Räder des Fahrzeugs, welche daher insbesondere bei hohen Bremsausgangsgeschwindigkeiten und großen Bremskräften thermomechanisch stark belastet und beansprucht werden. Insbesondere, aber nicht ausschließlich für klotzgebremste Fahrzeuge ist ein Einsatz des erfindungsgemäßen Verfahrens nützlich.

Der Erfindung liegt die Aufgabe zugrunde, ein Verfahren zum Betreiben eines Schienenfahrzeugs aufzuzeigen, welches dabei helfen soll, die äquivalente Konizität eines Schienenfahrzeug-Schiene-Systems zu überwachen.

Diese Aufgabe wird durch ein Verfahren mit den Merkmalen des Anspruchs 1 gelöst. Ferner sind Gegenstand der Erfindung eine entsprechende Vorrichtung oder ein System zur Datenverarbeitung gemäß Anspruch 9, eine Vorrichtung oder ein System zur Datenverarbeitung gemäß Anspruch 13, ein entsprechendes Computerprogramm gemäß Anspruch 10, ein entsprechender computerlesbarer Datenträger gemäß Anspruch 11, und ein entsprechendes Datenträgersignal gemäß Anspruch 12. Vorteilhafte Ausgestaltungen und Weiterbildungen sind Gegenstand von Unteransprüchen.

Bei dem erfindungsgemäßen Verfahren zum Betreiben eines Schienenfahrzeugs wird eine Laufstabilität des Schienenfahrzeugs mit Messungen erfasst. Außerdem wird eine Konizitätsvorhersage betreffend eine Änderung von Radprofilen des Schienenfahrzeugs rechnerisch unter Berücksichtigung einer gefahrenen Streckenlänge bestimmt. Dann erfolgt unter Verwendung der Laufstabilität und der Konizitätsvorhersage eine Unterscheidung zwischen streckenseitiger und fahrzeugseitiger Verursachung einer Änderung der äquivalenten Konizität.

Da die äquivalente Konizität sowohl durch Eigenschaften der Strecke, also den Schienen, als auch durch den Zustand der Räder des Schienenfahrzeugs beeinflusst wird, ist eine Unterscheidung zwischen diesen beiden möglichen Ursachen für eine unerwünschte Erhöhung der äquivalenten Konizität hilfreich. Denn nach erfolgter Unterscheidung können dann geeignete Maßnahmen getroffen werden, um den Mangel zu beheben, wodurch die äquivalente Konizität wieder reduziert werden kann. Geeignete Maßnahmen können insbesondere ein Überholen der Strecke sein, und/oder eine Erneuerung des Radprofils.

Um zu entscheiden, worin die Ursache für eine Erhöhung der äquivalenten Konizität wahrscheinlich zu suchen ist, werden zwei Größen betrachtet:
Zum einen wird die Stabilität der Fahrt des Schienenfahrzeugs bestimmt. Die Fahrstabilität ergibt sich aus einem Zusammenwirken von fahrzeug- und streckenseitigen Faktoren.

Zum zweiten wird die Konizitätsänderung alleine aus dem Fahrbetrieb, also das natürliche oder kontinuierliche Wachstum betrachtet, welche mit der Kilometerlaufleistung zunimmt. Hierbei handelt es sich um eine Vorhersage, denn es wird außer der Fahrstrecke keine Messung durchgeführt, sondern ein bekannter Zusammenhang zwischen gefahrener Streckenlänge und Konizitätsänderung ausgenutzt.

Die Unterscheidung zwischen streckenseitiger und fahrzeugseitiger Verursachung muss nicht derart getroffen werden, dass die Ursache der Konizitätserhöhung eindeutig festgestellt wird. Vielmehr reicht es aus, wenn als Ergebnis eine der beiden Ursachen als die wahrscheinlichere ausgegeben wird.

Vorzugsweise finden alle Schritte des erfindungsgemäßen Verfahrens im Schienenfahrzeug statt. Hierzu verfügt das Schienenfahrzeug über geeignete Messvorrichtungen, insbesondere zur Laufstabilitätsüberwachung und zur Streckenlängenmessung, sowie über eine Datenverarbeitungsanlage zur Auswertung der Messungen und zum Durchführen der Unterscheidung. Ferner kann die Datenverarbeitungsanlage vorzugsweise abhängig von der getroffenen Unterscheidung eine geeignete Maßnahme durchführen oder veranlassen.

In Weiterbildung der Erfindung werden zur Erfassung der Laufstabilität Daten einer Messvorrichtung ausgewertet, welche Beschleunigungsmessungen am Fahrwerkrahmen des Schienenfahrzeugs vornimmt. Diese Beschleunigungsdaten zeigen die Stärke des Schlingerns des Schienenfahrzeugs während der Fahrt an. Je größer die äquivalente Konizität ist, desto höhere Beschleunigungswerte werden im Mittel am Fahrwerkrahmen gemessen.

Erfindungsgemäß wird für die Konizitätsvorhersage die gefahrene Streckenlänge seit einer Radprofilierung gemessen und mittels einer Rechenvorschrift hieraus eine erwartete Änderung von Radprofilen des Schienenfahrzeugs bestimmt. Bei der Radprofilierung werden die Räder so bearbeitet, dass sie wieder ein Profil aufweisen, welches günstig für die äquivalente Konizität ist. Mit zunehmender Fahrstrecke verschlechtert sich dann das Profil. Hierbei kann der Zusammenhang zwischen gefahrener Strecke und Konizitätsänderung linear oder auch komplizierter sein.

In Weiterbildung der Erfindung erfolgt die Unterscheidung, indem die Laufstabilität und die Konizitätsvorhersage miteinander verglichen werden. Dieser Vergleich kann derart erfolgen, dass eine aus der Laufstabilität und/oder der Konizitätsvorhersage abgeleitete Größen miteinander verglichen werden. Beide Größen dienen der Anzeige einer Änderung der äquivalenten Konizität. Bei der Unterscheidung kann dann für eine streckenseitige Verursachung entschieden werden, wenn die Laufstabilität oder die hieraus abgeleitete Größe eine stärkere Änderung der äquivalenten Konizität anzeigt als die Konizitätsvorhersage oder die hieraus abgeleitete Größe, und für eine fahrzeugseitige Verursachung kann entschieden werden, wenn die Laufstabilität oder die hieraus abgeleitete Größe eine ähnliche Änderung der äquivalenten Konizität anzeigt wie die Konizitätsvorhersage oder die hieraus abgeleitete Größe. Die Entscheidung kann hierbei unter Verwendung geeigneter Grenz- oder Schwellenwerte erfolgen.

In Ausgestaltung der Erfindung werden im Fall einer Entscheidung für eine streckenseitige Verursachung zusätzlich ortsbezogene Informationen einbezogen, um eine Lokalisierung von Streckenschäden zu ermöglichen. Wenn also die äquivalente Konizität aufgrund von streckenseitigen Ursachen an einem bestimmten Streckenabschnitt erhöht ist, kann gezielt dort eine Reparatur der Schienen veranlasst werden.

In Weiterbildung der Erfindung verfügt das Schienenfahrzeug über Klotzbremsen. Es werden dann aus erfassten Daten betreffend erfolgte Klotzbrems-Bremsvorgänge thermische Energieinhalte der Räder bestimmt, wobei die Daten Bremsdrücke oder Bremskräfte oder Bremsmomente umfassen, sowie kinematische Größen wie Raddrehzahlen oder die Fahrgeschwindigkeit des Schienenfahrzeugs. Hieraus erfolgt rechnerisch eine zweite Konizitätsvorhersage betreffend eine Änderung von Radprofilen des Schienenfahrzeugs. Außer der ersten Konizitätsvorhersage, welche sich aus der Fahrstrecke ergibt, liegt somit eine zweite Konizitätsvorhersage vor, welche durch das Bremsverhalten beeinflusst wird. Denn durch den Wärmeeintrag in die Räder findet eine Verformung und hierdurch eine die äquivalente Konizität verschlechternde Änderung des Radprofils statt. Wenn die zweite Konizitätsvorhersage vorliegt, kann die Unterscheidung zwischen streckenseitiger und fahrzeugseitiger Verursachung zusätzlich unter Verwendung der zweiten Konizitätsvorhersage erfolgen.

Vorzugsweise werden nach der Unterscheidung eine oder mehrere der folgenden Maßnahmen durchgeführt:
Ausgeben einer Nachricht betreffend Mängel an der Schiene,
Ausgeben einer Nachricht betreffend Mängel an den Rädern des Schienenfahrzeugs,
Ausgeben einer Nachricht an den Fahrer betreffend den Radzustand oder ein zukünftiges Bremsverhalten.

Die ersten beiden Nachrichten werden vorzugsweise an eine sich außerhalb des Schienenfahrzeugs befindliche Einrichtung gesendet.

Die Ergebnisse des erfindungsgemäßen Verfahrens werden von einer Vorrichtung oder einem System zur Datenverarbeitung benutzt werden, welches Mittel aufweist zum Empfangen, Auswerten und Speichern von Informationen von mehreren Schienenfahrzeugen hinsichtlich einer nach dem beschriebenen Verfahren erfolgten Unterscheidung zwischen streckenseitiger und fahrzeugseitiger Verursachung einer Änderung der äquivalenten Konizität. Dadurch, dass Informationen von mehreren Schienenfahrzeugen verwendet werden, können diese plausibilisiert werden. Wenn z.B. mehrere Schienenfahrzeuge an einem bestimmten Streckenabschnitt eine streckenseitige Ursache einer Erhöhung der äquivalenten Konizität ausgeben, besteht Handlungsbedarf, diesen Streckenabschnitt näher zu untersuchen bzw. zu reparieren.

Das erfindungsgemäße Verfahren und/oder eine oder mehrere Funktionen, Merkmale und/oder Schritte des erfindungsgemäßen Verfahrens und/oder einer seiner Ausgestaltungen können computergestützt ablaufen. Hierzu kommt eines oder mehrere miteinander zusammenwirkende Computerprogramme zum Einsatz. Werden mehrere Programme verwendet, so können diese gemeinsam auf einem Computer gespeichert und von diesem ausgeführt werden, oder auch auf verschiedenen Computern an verschiedenen Orten. Da dies funktional gleichbedeutend ist, wird vorliegend im Singular "das Computergrogramm" und "der Computer" formuliert.

Im Folgenden wird die Erfindung anhand eines Ausführungsbeispiels näher erläutert. Dabei zeigen:
- Figur 1:: ein Schienenfahrzeug,
- Figur 2:: einen Verfahrensablauf.

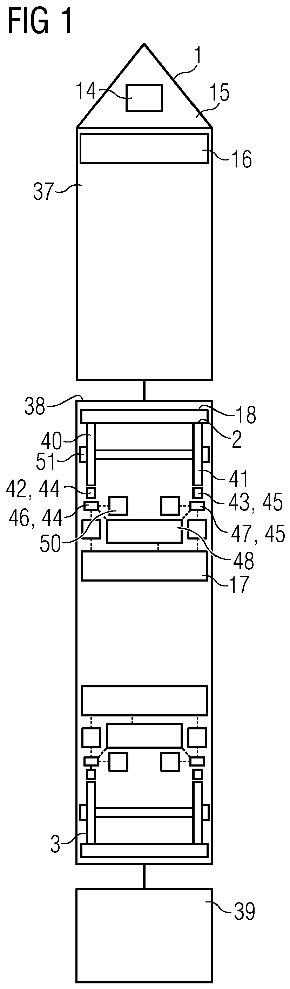

Fig. 1 zeigt ein als Schienenfahrzeug 1 ausgeführtes spurgeführtes Fahrzeug. Dieses Schienenfahrzeug 1 umfasst einen ersten Wagen 37, einen zweiten Wagen 38, einen dritten Wagen 39, sowie gegebenenfalls weitere, in der Figur nicht dargestellte Wagen. Der erste Wagen 37 stellt das Triebfahrzeug des Schienenfahrzeugs 1 dar und verfügt hierzu über einen Führerraum 15 für den Triebfahrzeugführer.

Zur Erläuterung von Details wird nun der zweite Wagen 38 betrachtet. Dieser weist ein erstes Fahrwerk 2 und ein zweites Fahrwerk 3 auf. Der erste Wagen 37, der dritte Wagen 39 und die weiteren Wagen verfügen über weitere, in der Figur nicht dargestellte Fahrwerke. Das erste Fahrwerk 2 umfasst ein erstes Rad 40 und ein zweites Rad 41, wobei die beiden Räder 40 und 41 untereinander über eine Radsatzwelle starr verbunden sind. Mit dem ersten Rad 40 kann ein erster Bremsklotz 42 einer ersten Klotzbremseinheit 44 in Kontakt gebracht werden, mit dem zweiten Rad 41 ein zweiter Bremsklotz 43 einer zweiten Klotzbremseinheit 45. Die erste Klotzbremseinheit 44 umfasst neben dem ersten Bremsklotz 42 einen pneumatischen ersten Bremszylinder 46, die zweite Klotzbremseinheit 45 neben dem zweiten Bremsklotz 43 einen pneumatischen zweiten Bremszylinder 47. Mittels des ersten Bremszylinders 46 wird der erste Bremsklotz 42 betätigt, mittels des zweiten Bremszylinders 47 der zweite Bremsklotz 43.

Der erste Bremszylinder 46 und der zweite Bremszylinder 47 werden von einem Bremssteuergerät 17 angesteuert. Elektrische Steuersignale aus dem ersten Bremssteuergerät 17 werden in einer Elektropneumatikeinrichtung 48 mit Analogwandlern, Ventilen, Druckluftbehältern usw. in Druckluftsignale gewandelt, welche in den ersten Bremszylinder 46 und den zweiten Bremszylinder 47 übertragen werden.

Jedes Rad 40, 41 fungiert als erstes Reibelement eines Reibungsbremssystems des Schienenfahrzeugs 1, ebenso wirkt der jeweils zugehörige Bremsklotz 42, 43 als zweites Reibelement des Reibungsbremssystems. Während Bremsungen des Schienenfahrzeugs 1 werden die zweiten Reibelemente gegen die ersten Reibelemente gedrückt. Die Bremsklötze 42, 43 wirken hierbei direkt auf die Lauffläche der Räder 40, 41, nicht auf eine am Rad oder der Welle befestigte Scheibe.

Das zweite Fahrwerk 3 ist konstruktiv sowie funktionell gleich ausgeführt wie das erste Fahrwerk und umfasst ebenfalls Klotzbremseinheiten mit Bremsklötzen, welche mit Rädern in Kontakt gebracht werden können. Entsprechendes kann für die Fahrwerke der anderen Wägen gelten.

Der Einsatz von Klotzbremsen ist vorteilhaft, da diese weniger Gewicht aufweisen als andere Bremsentypen, und ferner auch wenig Platz benötigen. Ihr Einsatz ist insbesondere dann angezeigt, wenn bei einem elektrischen Bremsvorgang keine Energie in das Netz zurück gespeist werden kann. Klotzbremsen können auch in Kombination mit elektrischen Bremsen eingesetzt werden, z.B. wenn eine plötzliche Schnell- oder Sicherheitsbremsung nötig ist, d.h. die maximale Bremskraft aufgewendet werden soll.

Bei einem Rad-Schiene-System laufen Schienenfahrzeuge, wie beispielsweise Voll-, U- und Straßenbahnen mit ihren Rädern auf Gleisen. Hierzu weisen sowohl die Räder als auch die Schienenköpfe geeignete Profile auf. Die Wechselwirkung von Schienen- und Radprofil ist entscheidend für den komfortablen und sicheren Lauf eines Schienenfahrzeugs. Üblicherweise werden hierfür konisch profilierte, also sich nach außen hin verjüngende, Räder verwendet. Zweck dieser Konizität des Radprofils ist die Selbstzentrierung des Radsatzes im geraden Gleis ohne Benutzung der Spurkränze.

Im Allgemeinen bestimmt die so genannte äquivalente Konizität des Rad-Schiene-Kontaktes die Laufeigenschaften des Schienenfahrzeugs. Die äquivalente Konizität ergibt sich insbesondere aus der Geometrie der Lauffläche der Räder, also aus dem Radprofil, und der Oberfläche des Schienenkopfes, also dem Schienenprofil. Sie ist definiert als die Neigung eines auf scharfen Kanten abrollenden kegeligen Radprofils, welche die gleiche Wellenlänge des Sinuslaufes des Fahrwerks ergäbe.

Ferner wird die äquivalente Konizität auch beeinflusst von der Spurweite, wobei bereits geringe Spurverengungen sich aufgrund der progressiven Gestaltung des Radprofils erhöhend auf die äquivalente Konizität auswirken.

Die Konizität führt dazu, dass das Drehgestell oder Fahrwerk des Schienenfahrzeugs einen Wellenlauf ausführt, d.h. sinusförmig wechselweise leicht nach rechts und links fährt. Dies entspricht einer Instabilität, was einerseits den Fahrkomfort mindert und andererseits auch die Fahrsicherheit beeinträchtigt. Der reduzierte Fahrkomfort macht sich für die Passagiere durch üblicherweise als unangenehm empfundene Schwingungen während der Fahrt bemerkbar. Hinsichtlich der Fahrsicherheit können Verschiebungen des Gleisrostes auftreten, welche durch große äquivalente Konizitäten hervorgerufen oder verstärkt werden können.

Grundsätzlich gilt, dass sich mit zunehmender äquivalenter Konizität das Laufverhalten des Schienenfahrzeugs verschlechtert. Diese Größe wird durch Verschleiß beeinflusst und ist daher ein zentraler Aspekt bei der Instandhaltung von Fahrzeug und Infrastruktur:
- Aufgrund von Radverschleiß wächst die Konizität im Fahrbetrieb durch Veränderung des Radprofils an. Daraus folgen ein reduzierter Fahrkomfort und eine reduzierte Laufstabilität. Dem kann durch Instandhaltungsmaßnahmen wie Nachprofilierung der Räder entgegengewirkt werden, was jedoch negative Auswirkungen auf die Standzeit der Räder des Schienenfahrzeugs hat.
- Verstärkt wird der Effekt des Radverschleißes durch den Einsatz von Klotzbremsen. Insbesondere deren hochenergetischer Einsatz kann sich negativ auf die Konizitätsentwicklung der Fahrzeugräder auswirken. Daraus folgt, dass der Fahrer einen starken Einfluss auf die Entwicklung des Radprofils hat: eine vorausschauende und schonende Fahrweise unter Vermeidung von starken Abbremsvorgängen mit der Klotzbremse führt zu einem langsameren Anstieg der Konizität der Räder mit der Zeit. Problematisch ist allerdings, dass der Fahrzeugführer üblicherweise keine Kenntnis vom aktuellen Zustand des Radprofils hat, und demnach sein Fahrverhalten nicht danach ausrichten kann, die zuvor genannten ungünstigen Auswirkungen zu reduzieren.
- Wie erläutert, ergibt sich die äquivalente Konizität aus der Wechselwirkung von Rad- und Schienenprofil. Die Ursache eines reduzierten Fahrkomforts oder einer reduzierten Laufstabilität kann also außer der beschriebenen Änderung der Konizität des Radprofils auch der Strecke zugeschrieben werden. Insbesondere können Profilveränderungen des Schienenkopfes oder Spurverengungen ursächlich für eine Erhöhung der äquivalenten Konizität sein. Dem kann entgegengewirkt werden durch geeignete Wartungsmaßnahmen wie profilierendes Schleifen der Schienen oder die Anpassung der Schienenbefestigung, wobei beide Maßnahmen aufwendig sind und hohe Kosten verursachen.

Aus diesen Punkten folgt, dass der Zustand der Fahrzeugräder und der Strecke umfangreich beobachtet und gegebenenfalls instandgehalten werden sollte. Dies ist jedoch aktuell nicht vollständig der Fall: eine kontinuierliche Ermittlung des aktuellen Zustands von Schienen- und Radprofil erfolgt nicht, so dass weder eine Instandhaltung von Rad und/oder Schiene zum geeigneten Zeitpunkt veranlasst, noch der Fahrer zur profilschonenden Fahrweise aufgerufen werden kann.

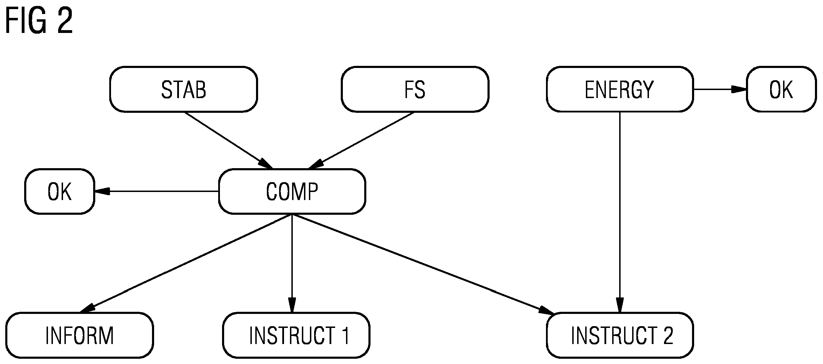

Um dies zu verbessern, verfügt das Schienenfahrzeug 1 über ein Konizitätsüberwachungsgerät 16. Ein schematischer Ablauf des von dem Konizitätsüberwachungsgerät 16 durchgeführten Verfahrens ist in Figur 2 gezeigt.

Im Schritt STAB wird - entsprechend einem ersten Kriterium zur Schätzung der Konizitätsentwicklung - die Laufstabilität des Fahrzeugs durch Messung ermittelt. Für diese Messung der Fahrzeugreaktion weist gemäß Figur 1 das Fahrzeug eine Messvorrichtung 18 zur Laufstabilitätsüberwachung auf. Die Überwachung der Laufstabilität erfolgt mittels Beschleunigungsmessungen am Fahrwerkrahmen. Hierbei wird das Laufverhalten des Drehgestells über die Querbeschleunigung des Drehgestellrahmens über dem Radsatz erfasst. Die Messwerte der Messvorrichtung 18 zur Laufstabilitätsüberwachung werden an das Konizitätsüberwachungsgerät 16 übermittelt, welches anhand der gemessenen Fahrzeugreaktionen das Ausmaß der Instabilität des Fahrzeugs 1 bestimmen kann.

Somit kann aus dem Laufverhalten auf die äquivalente Konizität geschlossen werden. Das Konizitätsüberwachungsgerät 16 kann hierzu die Messwerte der Messvorrichtung 18 zur Laufstabilitätsüberwachung entweder in kontinuierliche Zahlenwerte umwandeln, welche für die Konizitätsveränderung oder den aktuellen Zustand der Radprofils hinsichtlich der Konizität stehen, oder auch in diskrete Angaben wie "wenig Erhöhung" oder "guter Profilzustand", "mittlere Erhöhung" oder "ausreichender Profilzustand", "starke Erhöhung" oder "schlechter Profilzustand", "kritische Erhöhung" oder "sehr schlechter Profilzustand".

Wie bereits erläutert, resultiert die äquivalente Konizität aus dem Wechselspiel zwischen Fahrzeug und Schiene. Dies bedeutet, dass die Ursache der festgestellten Instabilität bei alleiniger Betrachtung der Ergebnisse der Messvorrichtung 18 zur Laufstabilitätsüberwachung nicht feststellbar ist.

Betreffend die Ursache der Instabilität im Fahrzeug wird vorliegend davon ausgegangen, dass diese ausschließlich in einer Degradation oder einem Verschleiß des Rades, und daraus folgend in einer Verschlechterung der Radkonizität zu suchen ist. Eine weitere mögliche Ursache wäre ein Defekt am Schlingerdämpfer; dies ist jedoch selten und es wird davon ausgegangen, dass dessen Degradation oder Versagen durch regelmäßige Wartung ausgeschlossen werden kann.

Daher wird als zweiter Schritt FS - entsprechend einem zweiten Kriterium zur Schätzung der Konizitätsentwicklung - von dem Konizitätsüberwachungsgerät 16 die Fahrstrecke seit der letzten Reprofilierung der Räder erfasst. Hierbei wird die bekannte Gesetzmäßigkeit ausgenutzt, dass die Konizität der Räder mit zunehmender Fahrstrecke zunimmt. Aus zuvor durchgeführten Abzeichnungskampagnen, wobei bei einer Abzeichnung die Konizität eines Rades genau bestimmt werden kann, ist bekannt, wie sich die Radkonizität anhängig von der Laufleistung entwickelt. Diese Kenntnis wird von dem Konizitätsüberwachungsgerät 16 benutzt.

Im einfachsten Fall liegt ein linearer Zusammenhang zwischen Zuwachs an Strecke und Zuwachs an Radkonizität vor. In diesem Fall kann ein Faktor verwendet werden, mit welchem die Laufleistung nach der letzten Reprofilierung multipliziert wird. Dieser Faktor kann spezifisch für ein Schienennetz sein, z.B. für das deutsche Schienennetz, oder auch für einen gegebenen Betrieb mit bestimmten Bogenhäufigkeiten. In Deutschland existieren recht heterogene Strecken, so dass ein repräsentativer Wert, z.B. ein Mittelwert über viele Strecken, verwendet werden kann, welcher wiedergibt, wie sich die Konizität eines Rades üblicherweise entwickelt. Wenn ein Schienenfahrzeug nur eine bestimmte Strecke fährt, kann ein für diese Strecke spezifischer Wert ermittelt und zur Berechnung herangezogen werden.

Jedoch sind auch komplexere Zusammenhänge zwischen Zuwachs an Strecke und Zuwachs an Radkonizität möglich. In jedem Fall verfügt das Konizitätsüberwachungsgerät 16 über eine Rechenvorschrift, um aus der gemessenen Fahrtstrecke einen Wert für den Zuwachs an Radkonizität zu bestimmen. Das Konizitätsüberwachungsgerät 16 kann somit aus der Erfassung der Fahrstrecke seit der letzten Reprofilierung eine Ermittlung des Konizitätszuwachses durch Radverschleiß vornehmen.

Liegen beide Kriterien vor, also das erste Kriterium zur Schätzung der Konizitätsentwicklung des Schrittes STAB, und das zweite Kriterium zur Schätzung der Konizitätsentwicklung des Schrittes FS, können diese im Schritt COMP miteinander verglichen werden. Hierbei wird also die gemessene Fahrzeugreaktion mit der vorhergesagten fahrzeugseitigen Konizität in Relation gesetzt, es erfolgt somit ein Abgleich des ermittelten Beschleunigungsniveaus mit der vorhergesagten fahrzeugseitigen Konizität.

Wenn das erste Kriterium des Schrittes STAB eine große Erhöhung der äquivalenten Konizität anzeigt, und das zweite Kriterium des Schrittes FS ebenfalls eine solche anzeigt, kann daraus geschlossen werden, dass die Ursache der Erhöhung der äquivalenten Konizität im Radprofil liegt.

Wenn das erste Kriterium des Schrittes STAB eine große Erhöhung der äquivalenten Konizität anzeigt, und das zweite Kriterium des Schrittes FS hingegen eine solche nicht anzeigt, oder zumindest eine deutlich geringere Erhöhung anzeigt, kann daraus geschlossen werden, dass die Ursache der Erhöhung der äquivalenten Konizität bei der Schiene zu suchen ist. In diesem Fall ist also aus Sicht des Schienenfahrzeugs eine Implausibilität vorhanden, nämlich ein erkanntes instabiles Verhalten des Fahrzeugs bei gleichzeitig moderatem Niveau der fahrzeugseitigen Konizitätszunahme durch Fahren einer nicht allzu großen Strecke seit der letzten Radprofilierung. Daher kann ein Bezug zu einem Streckeneinfluss hergestellt werden. Wenn das erste Kriterium des Schrittes STAB keine deutliche Erhöhung der äquivalenten Konizität anzeigt, muss dies ebenfalls für das zweite Kriterium des Schrittes FS gelten. Denn eine Konzitätserhöhung durch Verschlechterung des Radprofils muss sich zwangsläufig in beiden Kriterien niederschlagen.

Da über den Schritt FS das fahrzeugseitige Konizitätswachstum isoliert vorhersagt wird, während über den Schritt STAB ein Konizitätswachstum von Fahrzeug und/oder Schiene bestimmt wird, kann durch Kombination der beiden Ergebnisse gezielt die Ursache im Fahrzeug oder in der Strecke gesucht werden. Die beschriebene Kombination erlaubt somit eine Zuordnung der Ursache der Erhöhung der äquivalenten Konizität zu Fahrzeug oder Schiene.

Abhängig vom Ergebnis des Vergleiches im Schritt COMP wird eine der folgenden Maßnahmen getroffen:
Die Maßnahme OK bedeutet, dass im Moment nichts weiter zu tun ist. Dies ist dann der Fall, wenn das erste Kriterium des Schrittes STAB keine deutliche Erhöhung der äquivalenten Konizität anzeigt.

Die Maßnahme INFORM bedeutet, dass eine Instandsetzung der Schiene erwogen werden sollte. Dies ist dann der Fall, wenn der Vergleich im Schritt COMP ergeben hat, dass die Ursache der Erhöhung der äquivalenten Konizität bei der Schiene zu suchen ist. Hierfür bietet es sich an, dass die Auswertung der Messwerte der Messvorrichtung 18 zur Laufstabilitätsüberwachung von dem Konizitätsüberwachungsgerät 16 in Verbindung mit ortsbezogenen Informationen, insbesondere eines im Fahrzeug vorhandenen GPS Gerätes oder einer anderen satellitengestützten Ortungsmethode, erfolgt. Alternativ oder zusätzlich kann zur Lokalisierung von streckenseitigen Auffälligkeiten eine bei den Gleisen vorhandene Punkt- oder Linienlokalisierung zum Einsatz kommen. Durch diese verschiedenen Verfahren können Abschnitte der Schienen identifiziert werden, welche mangelhaft sind. Dann kann gezielt an diesen Abschnitten geprüft werden, ob das Profil der Schienen nachzubessern oder eine zu behebende Spurverengungen vorhanden ist. Zur Umsetzung der Maßnahme INFORM gibt das Konizitätsüberwachungsgerät 16 eine entsprechende Meldung aus. Hierfür kann eine eigene Schnittstelle des Konizitätsüberwachungsgeräts 16 für eine Kommunikation betreffend die Instandhaltung von Gleis und Fahrzeug vorgesehen sein.

Die Maßnahme INSTRUCT 1 bedeutet, dass eine Instandsetzung der Radprofile erwogen werden sollte. Dies ist dann der Fall, wenn die Ursache der Erhöhung der äquivalenten Konizität bei dem Radprofil zu suchen ist. Zur Umsetzung der Maßnahme INSTRUCT 1 gibt das Konizitätsüberwachungsgerät 16 eine entsprechende Meldung aus. Hierfür kann die bereits erwähnte Schnittstelle für eine Kommunikation betreffend die Instandhaltung von Gleis und Fahrzeug verwendet werden.

Während die beschriebenen Maßnahmen OK, INFORM, INSTRUCT 1 für Schienenfahrzeuge mit beliebigen Bremsen verwendbar sind, ist die Maßnahme INSTRUCT 2 nur für Fahrzeuge mit Klotzbremse relevant. Diese Maßnahme INSTRUCT 2 sollte wie auch die Maßnahme INSTRUCT 1 durchgeführt werden, wenn zuvor festgestellt wurde, dass die Ursache der Erhöhung der äquivalenten Konizität bei dem Radprofil zu suchen ist. Sie kann, wenn das Fahrzeug mit Klotzbremsen ausgestattet ist, zusätzlich oder alternativ zur Maßnahme INSTRUCT 1 vorgenommen werden. In diesem Fall kann der Triebfahrzeugführer, beispielsweise mittels einer in Figur 1 gezeigten Anzeige 14 in dem Führerraum 15, instruiert werden, die Klotzbremsen nur schonend einzusetzen, um hierdurch die Radprofile nicht weiter stark zu beeinträchtigen. Der Fahrer wird also mit einer Diagnosemeldung über den Zustand der Radprofile informiert, z.B. in Form einer Radzustandsampel, und kann sein Bremsverhalten entsprechend darauf abstimmen, insbesondere durch eine verschleißarme Fahrweise. Eine Ampel kann dem Fahrer in diskreten Werten oder durch Farben anzeigen, wie es um den Zustand der Radprofile bestellt ist. Vorzugsweise werden Grenzwerte hierfür so vorgegeben, dass eine Fahrweise, die sich ungünstig auf die Entwicklung des Radprofils auswirkt und somit zu unkomfortablem oder gar sicherheitsgefährdendem Fahren führt, durch Anpassung der Fahr- bzw. Bremsweise verhindert werden kann. Zur Signalisierung an den Fahrer können die oben bereits beschriebenen diskreten Angaben wie "wenig Erhöhung" oder "guter Profilzustand", "mittlere Erhöhung" oder "ausreichender Profilzustand", "starke Erhöhung" oder "schlechter Profilzustand", "kritische Erhöhung" oder "sehr schlechter Profilzustand" verwendet werden.

Die Entscheidung, welche der oben genannten Maßnahmen OK, INFORM, INSTRUCT 1, INSTRUCT 2 durchgeführt werden sollen, kann das Konizitätsüberwachungsgerät 16 geeignete Regeln gespeichert haben. Beispielsweise können Grenzwerte, eventuell auch für die Differenz der beiden Kriterien, vorgesehen sein, deren Unter- oder Überscheiten zugunsten einer Maßnahme spricht. Auch für die Häufigkeit der Durchführung des Schritte COMP kann das Konizitätsüberwachungsgerät 16 Vorgaben gespeichert haben, wie z.B. einmal pro gefahrene Strecke einer bestimmten Länge.

Das Schienenfahrzeug speichert die gesammelten Daten des Kriteriums STAB und auch die Entscheidung über die Maßnahmen OK, INFORM, INSTRUCT 1, INSTRUCT 2, vorzugsweise in Kombination mit ortsbezogenen Informationen. Wenn es dieselbe Strecke mehrfach befährt, können zugseitig Daten über Streckenauffälligkeiten aggregiert werden.

Ferner ist es vorteilhaft, landseitig, also in einer Datenbank außerhalb des betrachteten Schienenfahrzeugs, eine Aggregierung von Daten aus mehreren Schienenfahrzeugen durchzuführen. Dies kann zur Plausibilisierung von Streckenauffälligkeiten durch mehrere Züge genutzt werden.

Ebenfalls kann aus einer solchen Aggregierung auf weitere, seltene fahrzeugseitige Einflüsse wie z.B. einen defekten Schlingerdämpfer geschlossen werden, wenn an einem definierten Ort im Netz nur ein Schienenfahrzeug von mehreren starkes Schlingern zeigt, welches nicht durch das Radprofil verursacht sein kann.

Das bisher erläuterte kann - mit Ausnahme der optionalen Maßnahme INSTRUCT 2 - auf ein Schienenfahrzeug mit oder ohne Klotzbremse angewandt werden. Im Folgenden wird ein zusätzliches Vorgehen beschrieben, welches spezifisch für Schienenfahrzeuge mit Klotzbremse ist:
Hierzu werden einerseits Bremsdrücke des Reibungsbremssystems des Schienenfahrzeugs und andererseits kinematische Größen des jeweiligen Fahrwerks kontinuierlich erfasst. Als Bremsdrücke werden Zylinderdrücke der Bremszylinder erfasst, welche als Aktuatoren in Bezug auf die Klotzbremse fungieren.

Hierzu umfasst das Konizitätsüberwachungsgerät 16 einen Energiebeobachter zur Erfassung der durch die Klotzbremse dissipierten Bremsenergie. Dieser Energiebeobachter berechnet, wie im Folgenden näher beschrieben, die Reibleistung aus Bremsdruck und Drehzahl- oder Geschwindigkeitssignalen, und ermittelt daraus den Konizitätszuwachs.

Der Energiebeobachter des Konizitätsüberwachungsgeräts 16 ist hierzu mit einer in Figur 1 gezeigten ersten Erfassungseinrichtung 50 für Bremsdrücke des Reibungsbremssystems, welche als mit dem ersten Bremszylinder 46 gekoppeltes Druckmessgerät ausgeführt ist, sowie mit einer zweiten Erfassungseinrichtung 51 für kinematische Größen des ersten Fahrwerks 2, welche als mit dem ersten Rad 40 gekoppelter erster Drehzahlmesser ausgebildet ist, verbunden. Es ist auch möglich, dass nicht Bremsdrücke, sondern Bremskräfte oder Bremsmomente erfasst werden, so dass die erste Erfassungseinrichtung 50 als Kraftmessdose oder Drehmomentsensor ausgebildet sein kann. Die von der zweiten Erfassungseinrichtung 51 erfassten kinematischen Größen umfassen Drehzahlen der Räder sowie Zeiten; es ist jedoch auch möglich, dass als kinematische Größe beispielsweise die Fahrgeschwindigkeit des Schienenfahrzeugs 1 erfasst wird.

Die entsprechenden Komponenten können alternativ oder zusätzlich auch am zweiten Rad 41 und der zugehörigen Klotzbremse vorgesehen sein.

Aus den erfassten Größen, also den Bremsdrücken, Drehzahlen und Zeiten, sowie weiteren bekannten Größen, nämlich den Reibungskoeffizienten, Proportionalitätsfaktoren, Radradien, werden vom Energiebeobachter laufend Reibleistungen und thermische Energien aufgrund von Reibung zwischen den ersten Reibelementen und den zweiten Reibelementen ermittelt. Alternativ ist es wie bereits ausgeführt möglich, dass die Reibleistung nicht auf Grundlage von Bremsdrücken, sondern auf Basis von Bremskräften oder Bremsmomenten ermittelt wird.

Zunächst werden zur Reibleistungsermittlung aus den Bremsdrücken mit den Proportionalitätsfaktoren und den Reibungskoeffizienten, über bekannte Zusammenhänge zwischen Drücken und Kräften, sowie zwischen Normal- und Tangentialkräften, die Tangentialkräfte zwischen den ersten und den zweiten Reibelementen bestimmt. Die Proportionalitätsfaktoren umfassen Zylinder- und Gestängeübersetzungen, Wirkungsgrade etc. der Klotzbremseinheiten. Außerdem werden aus den Drehzahlen mit den Radradien, über bekannte kinematische Zusammenhänge zwischen Drehzahlen bzw. Winkelgeschwindigkeiten und Umfangsgeschwindigkeiten, Radumfangsgeschwindigkeiten bestimmt. Aus Multiplikation der Tangentialkräfte mit den Umfangsgeschwindigkeiten werden Reibleistungswerte ermittelt. Mittels Multiplikation der Reibleistungen mit den Zeiten werden Energieeinträge in die ersten Reibelemente, also die Räder des Schienenfahrzeugs, ermittelt.

Der Energiebeobachter stellt dem Konizitätsüberwachungsgerät 16 also thermische Energieinhalte der Räder zur Verfügung. Dies beruht auf einer mittels der erläuterten Zusammenhänge durchgeführten Abschätzung der aufgrund erfolgter Bremsvorgänge in der Radscheibe gespeicherten thermischen Energie. Diese thermischen Energieinhalte werden im in Figur 2 gezeigten Schritt ENERGY über eine im Konizitätsüberwachungsgerät 16 gespeicherte Rechenvorschrift in eine Radkonizitätsänderung umgewandelt. Der Hintergrund hierzu ist, dass der Wärmeeintrag in ein Rad zu Verformungen führt. Bei klotzgebremsten Rädern sind durch Versuchskampagnen mittlerweile die Konizitätszuwächse abhängig von der Bremsenergie prognostizierbar, woraus eine derartige Rechenvorschrift erstellt werden kann. Da diese Bremsenergie wie beschrieben durch den Energiewächter erfasst wird, ist ein Umrechnen von Bremsenergie in Konizitätszuwachs mit den zuvor ermittelten Gesetzmäßigkeiten möglich.

Abhängig vom Wert dieser im Schritt ENERGY bestimmten Radkonizitätsänderung wird entweder die Maßnahme OK durchgeführt, d.h. es ist momentan nichts zu unternehmen, oder die oben bereits erläuterte Maßnahme INSTRUCT 2. Vorzugsweise verwendet das Konizitätsüberwachungsgerät 16 einen Schwellenwert, um zu entscheiden, ab wann die Maßnahme INSTRUCT 2 vorzunehmen ist.

Bei einem Fahrzeug mit Klotzbremse können beide Vorgehensweisen, d.h. einerseits über die Schritte STAB, FS, COMP, und andererseits über den Schritt ENERGY durchgeführt werden. Da beide Vorgehensweisen zu der Maßnahme INSTRUCT 2 führen können, ist es möglich, für die Veranlassung dieser Maßnahme INSTRUCT 2 eine gemeinsame Regel vorzusehen, z.B. einen kombinierten Schwellenwert für die beiden über COMP und ENERGY verlaufenden Äste.

Das erläuterte Verfahren basiert im Wesentlichen auf einer Schätzung der Radkonizitätsentwicklung in den Schritten FS und ENERGY ausgehend von bekannten Gesetzmäßigkeiten. Dies ermöglicht ein frühzeitiges Eingreifen, noch ehe es zu unkomfortablem Fahrverhalten des Schienenfahrzeugs kommt. Da ein starker Anstieg der Konizität erkannt werden kann, ehe es zu komfortmindernden Fahrzeugreaktionen kommt, kann durch ein Gegensteuern über Instandhaltung oder angepassten Fahrbetrieb eine sichere und komfortable Nutzung des Schienenfahrzeugs gewährleistet werden. Insbesondere wird außer einer Reprofilierung der Räder auch eine Änderung des Fahrspiels durch den Triebfahrzeugführer realisierbar, was erhebliche Vorteile für die Standzeit der Räder mit sich bringt.

Zur Durchführung des erläuterten Verfahrens verwendet das Konizitätsüberwachungsgerät 16 ein Computerprogramm, welches die Berechnungen durchführt und Signale zur Durchführung der Maßnahmen INFORM, INSTRUCT 1, INSTRUCT 2 ausgibt. Als Eingangsgrößen werden Daten von dem Energiebeobachter verwendet, sowie die Fahrstrecke seit der letzten Reprofilierung der Räder und Daten der Messvorrichtung 18 zur Laufstabilitätsüberwachung.

Die Erfindung wurde voranstehend an einem Ausführungsbeispiel beschrieben. Es versteht sich, dass zahlreiche Änderungen und Modifikationen möglich sind, ohne ohne den in den unabhängigen Ansprüchen definierten Rahmen der Erfindung zu verlassen.

## Patentansprüche

1. Verfahren zum Betreiben eines Schienenfahrzeugs (1), bei dem
eine Laufstabilität (STAB) des Schienenfahrzeugs (1) mit Messungen erfasst wird,
eine Konizitätsvorhersage (FS) betreffend eine Änderung von Radprofilen des Schienenfahrzeugs (1) rechnerisch unter Berücksichtigung einer gefahrenen Streckenlänge bestimmt wird, **dadurch gekennzeichnet, dass** für die Konizitätsvorhersage (FS) die gefahrene Streckenlänge seit einer Radprofilierung gemessen und mittels einer Rechenvorschrift hieraus eine erwartete Änderung von Radprofilen des Schienenfahrzeugs (1) bestimmt wird,
unter Verwendung der Laufstabilität (STAB) und der Konizitätsvorhersage (FS) eine Unterscheidung zwischen streckenseitiger und fahrzeugseitiger Verursachung einer Änderung einer äquivalenten Konizität erfolgt.

2. Verfahren nach Anspruch 1, bei dem
zur Erfassung der Laufstabilität (STAB) Daten einer Messvorrichtung (18) ausgewertet werden, welche Beschleunigungsmessungen am Fahrwerkrahmen des Schienenfahrzeugs (1) vornimmt.

3. Verfahren nach einem der Ansprüche 1 bis 2, bei dem die Unterscheidung erfolgt, indem die Laufstabilität (STAB) und die Konizitätsvorhersage (FS) miteinander verglichen werden (COMP).

4. Verfahren nach Anspruch 3, bei dem
bei der Unterscheidung
für eine streckenseitige Verursachung entschieden wird, wenn die Laufstabilität (STAB) eine stärkere Änderung der äquivalenten Konizität anzeigt als die Konizitätsvorhersage, und für eine fahrzeugseitige Verursachung entschieden wird, wenn die Laufstabilität (STAB) eine ähnliche Änderung der äquivalenten Konizität anzeigt wie die Konizitätsvorhersage.

5. Verfahren nach einem der Ansprüche 1 bis 4, bei dem im Fall einer Entscheidung für eine streckenseitige Verursachung zusätzlich ortsbezogene Informationen einbezogen werden, um eine Lokalisierung von Streckenschäden zu ermöglichen.

6. Verfahren nach einem der Ansprüche 1 bis 5, bei dem das Schienenfahrzeug (1) über Klotzbremsen (44, 45) verfügt,
aus erfassten Daten betreffend erfolgte Bremsvorgänge mit den Klotzbremsen (44, 45) thermische Energieinhalte der Räder bestimmt werden,
wobei die Daten Bremsdrücke oder Bremskräfte oder Bremsmomente umfassen, sowie kinematische Größen wie Raddrehzahlen oder die Fahrgeschwindigkeit des Schienenfahrzeugs (1),
und hieraus rechnerisch eine zweite Konizitätsvorhersage (ENERGY) betreffend eine Änderung von Radprofilen des Schienenfahrzeugs (1) erfolgt.

7. Verfahren nach Anspruch 6, bei dem
die Unterscheidung zwischen streckenseitiger und fahrzeugseitiger Verursachung zusätzlich unter Verwendung der zweiten Konizitätsvorhersage (ENERGY) erfolgt.

8. Verfahren nach einem der Ansprüche 1 bis 7, bei dem nach der Unterscheidung eine oder mehrere der folgenden Maßnahmen durchgeführt werden:
Ausgeben einer Nachricht betreffend Mängel an der Schiene (INOFRM),
Ausgeben einer Nachricht betreffend Mängel an den Rädern des Schienenfahrzeugs (INSTRUCT 1),
Ausgeben einer Nachricht an den Fahrer betreffend den Radzustand oder ein zukünftiges Bremsverhalten (INSTRUCT 2).

9. Vorrichtung oder System zur Datenverarbeitung, umfassend Mittel zur Ausführung des Verfahrens nach einem der Ansprüche 1 bis 8.

10. Computerprogramm, umfassend Befehle, die bei der Ausführung des Programms durch einen Computer diesen veranlassen, die Schritte des Verfahrens nach einem der Ansprüche 1 bis 8 auszuführen.

11. Computerlesbarer Datenträger, auf dem das Computerprogramm nach Anspruch 10 gespeichert ist.

12. Datenträgersignal, das das Computerprogramm nach Anspruch 10 überträgt.

13. Vorrichtung oder System zur Datenverarbeitung, umfassend Mittel zum Empfangen, Auswerten und Speichern von Informationen von mehreren Schienenfahrzeugen (1) hinsichtlich einer nach einem Verfahren nach einem der Ansprüche 1 bis 8 erfolgten Unterscheidung zwischen streckenseitiger und fahrzeugseitiger Verursachung einer Änderung der äquivalenten Konizität.

## Claims

1. Method for operating a rail vehicle (1), wherein
a running stability (STAB) of the rail vehicle (1) is detected using measurements,
a conicity prediction (FS) regarding a change in wheel profiles of the rail vehicle (1) is determined by a computer taking into account a distance travelled, **characterized in that**, for the conicity prediction (FS), the distance travelled since a wheel profiling is measured and a computation rule is used to determine an expected change in wheel profiles of the rail vehicle (1) from this,
the running stability (STAB) and the conicity prediction (FS) are used to make a distinction between a track section-caused change and a vehicle-caused change in an equivalent conicity.

2. Method according to Claim 1, wherein
data from a measuring device (18), which takes acceleration measurements on the running gear frame of the rail vehicle (1), are evaluated to detect the running stability (STAB).

3. Method according to one of Claims 1 to 2, wherein
the distinction is made by comparing (COMP) the running stability (STAB) and the conicity prediction (FS) with one another.

4. Method according to Claim 3, wherein,
when making the distinction,
a decision is made that the cause is the track section if the running stability (STAB) indicates a greater change in the equivalent conicity than the conicity prediction, and a decision is made that the cause is the vehicle if the running stability (STAB) indicates a similar change in the equivalent conicity to the conicity prediction.

5. Method according to one of Claims 1 to 4, wherein,
if a decision is made that the cause is the track section, location-related information is additionally incorporated to make it possible to locate damage to the track section.

6. Method according to one of Claims 1 to 5, wherein
the rail vehicle (1) has shoe-type brakes (44, 45),
the heat energy content of the wheels is determined from detected data regarding braking operations that have taken place with the shoe-type brakes (44, 45),
the data including brake pressures or braking forces or brake torques, and also kinematic variables such as wheel speeds or the running speed of the rail vehicle (1),
and a computer makes a second conicity prediction (ENERGY) regarding a change in wheel profiles of the rail vehicle (1) from this.

7. Method according to Claim 6, wherein
the distinction between a track-related cause and a vehicle-related cause is additionally made using the second conicity prediction (ENERGY).

8. Method according to one of Claims 1 to 7, wherein,
after the distinction is made, one or more of the following measures are carried out:
outputting a message regarding defects on the rail (INFORM),
outputting a message regarding defects on the wheels of the rail vehicle (INSTRUCT 1),
outputting a message to the driver regarding the wheel state or a future braking behaviour (INSTRUCT 2).

9. Data processing device or system, comprising means for carrying out the method according to one of Claims 1 to 8.

10. Computer program comprising instructions which, when the program is run by a computer, prompt the computer to carry out the steps of the method according to one of Claims 1 to 8.

11. Computer-readable data carrier on which the computer program according to Claim 10 is stored.

12. Data carrier signal which communicates the computer program according to Claim 11.

13. Data processing device or system, comprising means for receiving, evaluating and storing information from multiple rail vehicles (1) as regards a distinction, made by a method according to one of Claims 1 to 8, between a track section-caused change and a vehicle-caused change in the equivalent conicity.

## Revendications

1. Procédé de fonctionnement d'un véhicule ferroviaire (1), dans lequel une stabilité de fonctionnement (STAB) du véhicule ferroviaire (1) est détectée avec des mesures,
une prédiction de conicité (FS) relative à une modification des profils de roue du véhicule ferroviaire (1) est déterminée arithmétiquement en tenant compte d'une longueur de trajet parcourue, **caractérisé en ce que** pour la prédiction de conicité (FS), la longueur de trajet parcourue est mesurée depuis un profilage de roue et au moyen d'une règle de calcul est déterminée une modification attendue de profils de roue du véhicule ferroviaire (1),
en utilisant la stabilité de fonctionnement (STAB) et la prédiction de conicité (FS) est effectuée une distinction entre la cause côté voie et côté véhicule d'une modification d'une conicité équivalente.

2. Procédé selon la revendication 1, dans lequel pour détecter la stabilité de fonctionnement (STAB) sont évaluées des données d'un dispositif de mesure (18), lequel procède à des mesures d'accélération sur le cadre de châssis du véhicule ferroviaire (1).

3. Procédé selon l'une des revendications 1 à 2, dans lequel la distinction est effectuée en comparant la stabilité de fonctionnement (STAB) et la prédiction de conicité (FS) entre elles (COMP).

4. Procédé selon la revendication 3, dans lequel lors de la distinction pour une cause côté voie, il est décidé si la stabilité de fonctionnement (STAB) indique une modification plus forte de la conicité équivalente que la prédiction de conicité, et pour une cause côté véhicule il est décidé si la stabilité de fonctionnement (STAB) indique une modification semblable à la conicité équivalente comme la prédiction de conicité.

5. Procédé selon l'une des revendications 1 à 4, dans lequel dans le cas d'une décision pour une cause côté voie, des informations en fonction du lieu sont incluses en complément pour permettre une localisation de dommages de voie.

6. Procédé selon l'une des revendications 1 à 5, dans lequel le véhicule ferroviaire (1) dispose de freins à sabot (44, 45), à partir des données saisies concernant des processus de freinage effectués avec les freins à sabot (44, 45), des teneurs énergétiques thermiques des roues sont déterminées, dans lequel les données comprennent des pressions de freinage ou des forces de freinage ou des couples de freinage, ainsi que des grandeurs cinématiques comme des vitesses de roue ou la vitesse de déplacement du véhicule ferroviaire (1),
et il en découle arithmétiquement une deuxième prédiction de conicité (ENERGY) concernant une modification de profils de roue du véhicule ferroviaire (1).

7. Procédé selon la revendication 6, dans lequel la distinction entre une cause côté voie et côté véhicule est effectuée en complément en utilisant la deuxième prédiction de conicité (ENERGY).

8. Procédé selon l'une des revendications 1 à 7, dans lequel après la distinction, une ou plusieurs des mesures suivantes sont prises :
édition d'un message concernant des défauts sur le rail (INFORM),
édition d'un message concernant des défauts sur les roues du véhicule ferroviaire (INSTRUCT 1),
édition d'un message au conducteur concernant l'état des roues ou un comportement de freinage futur (INSTRUCT 2).

9. Dispositif ou système de traitement de données, comprenant des moyens de réalisation du procédé selon l'une des revendications 1 à 8.

10. Programme informatique, comprenant des instructions, qui lors de l'exécution du programme par un ordinateur entraînent celui-ci à réaliser les étapes du procédé selon l'une des revendications 1 à 8.

11. Support de données lisible par ordinateur sur lequel est enregistré le programme informatique selon la revendication 10.

12. Signal de support de données qui transmet le programme informatique selon la revendication 10.

13. Dispositif ou système de traitement de données, comprenant des moyens pour recevoir, évaluer et enregistrer des informations de plusieurs véhicules ferroviaires (1) concernant une distinction effectuée selon un procédé selon l'une des revendications 1 à 8 entre une cause côté voie et côté véhicule d'une modification de la conicité équivalente.
